# EUROPEAN PATENT APPLICATION

(11) **EP 4 394 931 A1**
(43) Date of publication of application: **03.07.2024**
(21) Application number: 23845635.4
(22) Date of filing: 27.07.2023
(51) Int. Cl.: H01M 4/36

(54) **SODIUM BATTERY POSITIVE ELECTRODE MATERIAL, AND PREPARATION METHOD THEREFOR AND USE THEREOF**

(30) Priority: 29.07.2022 CN 202210907322
(71) Applicant: HUBEI WANRUN NEW ENERGY TECHNOLOGY CO., LTD., Shiyan, Hubei 442500 (CN)
(72) Inventor: WANG, Qin, Shiyan, Hubei 442500 (CN)
(74) Representative: Studio Torta S.p.A.
(86) International application number: PCT/CN2023/109502
(87) International publication number: WO 2024/022428

(57) **Abstract**

The present disclosure provides a sodium battery cathode electrode material, which has a chemical formula as follows:xNaMBO₃.yNa₂Ti₃O₇.zNa₃V₂(BO₃)₃/C, wherein the mole number ratio of x to y to z is 0.94-0.96:0.02-0.03:0.02-0.03; M is Fe and Mn, and the mole number ratio of Fe to Mn is 8-9:1-2; and the mass fraction of carbon in the sodium battery cathode electrode material is 1.2% to 1.5%. The sodium battery cathode electrode material provided by the present disclosure is high in capacity, high in voltage platform, stable in structure and high in cycle performance, and the preparation method is simple, low in cost and short in process flow.

## Description

### Cross-Reference to Related Application

The present disclosure claims the priority of a Chinese patent application submitted to the Patent Office of the People's Republic of China on July 29, 2022, with application No. 202210907322.9 and titled "A sodium battery cathode electrode material and preparation method and application thereof", which is incorporated in the present disclosure by reference in its entirety.

### Technical Field

The present disclosure belongs to the technical field of sodium batteries and specifically relates to a sodium battery cathode electrode material and preparation method and application thereof.

### Background

With the depletion of fossil energy and the rapid development of clean energies such as wind and solar energies, the global energy consumption pattern will gradually shift from fossil energy to new energies. The transformation of energy consumption patterns largely relies on advanced large-scale energy storage technologies. Among the current various energy storage technologies, commercial lithium ion batteries are a relatively mature energy storage technology, with advantages such as high energy density, low self discharge rate, long lifespan, convenient integration and management, etc. Sodium ion batteries first appeared in the early 1980s, however, due to the more excellent performance of lithium ion batteries, researches on sodium ion batteries has stalled. Since 2010, with the increasing demand in the field of power batteries, there has been a shortage of materials for lithium ion batteries, leading to a resurgence in researches on room temperature sodium ion batteries. According to different application scenarios, sodium ion batteries can be mainly divided into two types, i.e. power batteries and energy storage batteries. Compared to the mature commercialization level of lithium ion batteries, the commercialization progress of sodium ion batteries is only at an initial stage, only a few companies have made preliminary commercialization of sodium ion batteries, and a complete and mature industrial chain has not yet been formed.

In recent years, sodium ion battery technology has regained the favor of researchers due to its advantages such as abundant global reserves of sodium resources, low cost, and similar energy storage principles and process technologies to lithium ion batteries, and it has developed into an energy storage technology with great application potential.

Although sodium ion batteries have the potential advantage of low cost, their cycle life and rate performance and the like still cannot meet the needs of current large-scale energy storage technologies. Electrolyte, as a medium for electrochemical reactions, is a key factor determining the thermodynamic and kinetic processes of interface reactions for electrode materials, thereby affecting the cycle stability and rate performance, etc., of the sodium ion batteries. Although sodium and lithium have similar properties, Na⁺ has a larger radius and mass than Li⁺, and the specific phase transition process, storage mechanism, and interface process of its intercalation and de-intercalation in electrode materials, etc., are very different from Li⁺. Therefore, the advantage of sodium battery materials lies in their low cost, however conventional sodium battery materials currently have disadvantages such as instability and low capacity, etc. Therefore, there is an urgent need to develop a material with stable structure, high capacity, and low cost.

### Summary

In view of the above, the technical problem to be solved by the present disclosure is to provide a sodium battery cathode electrode material and preparation method and application thereof. The sodium battery cathode electrode material provided by the present disclosure has a stable structure, high capacity, and low cost.

The present disclosure provides a sodium battery cathode electrode material, which has a chemical formula as follows:

xNaM BO₃.yNa₂Ti₃O₇.zNa₃V₂(BO₃)₃/C;

wherein, the mole number ratio of x to y to z is 0.94-0.96:0.02-0.03:0.02-0.03;
M is Fe and Mn, and the mole number ratio of Fe to Mn is 8-9:1-2; and
the mass fraction of carbon in the sodium battery cathode electrode material is 1.2% to 1.5%.

Preferably, the sodium battery cathode electrode material includes a core material and a first and second coating layers sequentially coated on the surface of the core material. The core material is NaMBOs, the first coating layer includes Na₂Ti₃O₇ and Na₃V₂(BO₃)₃, and the second coating layer is amorphous carbon.

Preferably, the particle size of the core material is 200 nm to 500 nm, the thickness of the first coating layer is 10 nm to 20 nm, and the thickness of the second coating layer is 1.5 nm to 3.5 nm.

The present disclosure also provides a preparation method of the above sodium battery cathode electrode material including the following steps:
A) mixing a ferrous salt, a manganese salt, and water to obtain a ferromanganese mixed solution;
   mixing the ferromanganese mixed solution with the ammonium bicarbonate solution for reaction to obtain a reaction product;
B) adding the reaction product to a hydrazine hydrate solution for slurrying and to an oxalic acid solution for precipitation sequentially, and adjusting the pH of the solution to obtain ferromanganese oxalate;
C) mixing the ferromanganese oxalate with sodium borate and sodium bicarbonate, then adding sodium hexametaphosphate solution for slurrying, grinding same and then spray drying to obtain a material, calcining the obtained material in an inert atmosphere to obtain the first calcined material; and
D) mixing sodium metavanadate, sodium borate, titanium dioxide, sodium stearate, the first calcined material and water, grinding same and then spray drying, after which performing a secondary calcining to obtain a calcined product, sieving the calcined product for iron removal to obtain the sodium battery cathode electrode material.

Preferably, in step A), the ferrous salt is selected from ferrous sulfate crystal;
the manganese salt is selected from manganese sulfate crystal;
the concentration of the ammonium bicarbonate solution is 1.5 mol/L to 1.8 mol/L;
the ratio of the molar weight of the ammonium bicarbonate to the total molar weight of manganese and iron in the ferrous and manganese salts is 2.2-2.5:1; and
after mixing the ferromanganese mixed solution with the ammonium bicarbonate solution, a pH regulator is added to adjust the pH of the slurry to 7.3-7.5, and the stirring speed of the entire process is 300 r/min to 500 r/min.

Preferably, in step B), the concentration of hydrazine hydrate solution is 0.05 mol/L to 0.1 mol/L;
the mass ratio of the reaction product to the hydrazine hydrate is 1 :1.5-2;
the concentration of the oxalic acid solution is 0.2 mol/L to 0.5 mol/L; and
the pH of the solution is adjusted to 4-5.

Preferably, in step C), the molar ratio of ferromanganese oxalate to sodium borate to sodium bicarbonate is 4:1.02-1.03:2.02-2.04;
the mass of sodium hexametaphosphate solution is 2 to 2.5 times the total mass of the added ferromanganese oxalate, sodium borate, and sodium bicarbonate;
the concentration of sodium hexametaphosphate solution is 0.02 mol/L to 0.05 mol/L;
the slurry is ground to a particle size of 0.2 µm to 0.3 µm;
during the spray drying process, the final spray dried material is maintained at a particle size of 10 µm to 30 µm, and a water content of less than 1 wt%, and
during the calcination process, the calcination atmosphere is at least one of carbon dioxide, nitrogen and argon, the temperature is raised to 450-500°C at a heating rate of 80°C/h to 100°C/h for calcining 3 hours to 5 hours, and then cooling the material at a cooling rate of 100°C/h to 150°C/h to a temperature of less than or equal to 50°C before discharging, and the first calcined product is sealed and preserved in a nitrogen environment.

Preferably, in step D), the molar ratio of the first calcined material to sodium metavanadate, sodium borate, titanium dioxide, and sodium stearate is 0.94-0.96:0.04-0.06:0.015-0.0225:0.06-0.09:0.03-0.045.

The titanium dioxide is a nano titanium dioxide with a primary particle size of 15 nm to 50 nm, a BET of 20 m²/g to 40 m²/g, and a purity of greater than or equal to 99 wt%.

Preferably, in step D), the mixing method involves:
mixing sodium metavanadate, sodium borate, titanium dioxide, and sodium stearate, and then adding water for slurrying to obtain a mixed slurry with a solid content of 1 wt% to 3 wt%, followed by adding the first calcined material and mixing same to obtain the mixed slurry;
the grinding involves grinding the material to a particle size of 200 nm to 250 nm;
during the spray drying process, the final spray dried material is maintained at a water content of less than 0.5 wt% and a particle size of 3 µm to 10 µm;
the secondary calcining process involves: a sintering atmosphere of nitrogen or argon gas; a heating rate of 50°C/h to 80°C/h, a heat preservation temperature of 650°C to 700°C, and a heat preservation time of 4 hours to 8 hours, wherein the calcination process is carried out using a roller-hearth furnace, which is connected to a variable frequency induced draft fan, the furnace pressure inside the roller-hearth furnace is controlled to be 60 Pa to 100 Pa higher than the external atmospheric pressure, and the humidity in the heat preservation section is controlled to be less than or equal to 5% and the cooling rate in the cooling section is 100°C/h to 150 °C/h; and
the iron removal by sieving adopts electromagnetic iron removal, and the demagnetization is stopped when the iron removal reaches the magnetic material of the product is less than or equal to 300 ppb, the sieving is carried out using a 100 to 150 mesh sieve.

A vacuum packaging process is also included after the iron removal by sieving process, which is carried out in a constant temperature and humidity room at a temperature of 15°C to 25°C and a humidity of 5% to 10%.

The present disclosure also provides a sodium battery including the above sodium battery cathode electrode material.

Compared with prior art, the present disclosure provides a sodium battery cathode electrode material, which has a chemical formula as follows:xNaMBO₃.yNa₂Ti₃O₇.zNa₃V₂(BO₃)₃/C, wherein the mole number ratio of x to y to z is 0.94-0.96:0.02-0.03:0.02-0.03; M is Fe and Mn, and the mole number ratio of Fe to Mn is 8-9:1-2; and the mass fraction of carbon in the sodium battery cathode electrode material is 1.2% to 1.5%. The sodium battery cathode electrode material provided by the present disclosure is high in capacity, high in voltage platform, stable in structure and high in cycle performance, and the preparation method is simple, low in cost and short in process flow. The present disclosure uses borate as the anion, which has the advantage of lower price than phosphate, the price of sodium borate is about 3,000 yuan/ton, while the price of sodium phosphate is more than 6,000 yuan/ton. At the same time, because the mole number of borate radical is smaller than that of phosphate radical, the theoretical capacity of the borate type cathode electrode material is higher than that of the phosphate type cathode electrode material in terms of the theoretical capacity of the final prepared product. The present disclosure uses Na₂Ti₃O₇ and Na₃V₂(BO₃)₃ to coat the surface of NaMBOs, with C coated on the surface of Na₂Ti₃O₇ and Na₃V₂(BO₃)₃, and the carbon being amorphous carbon. The main problem with the borate series cathode electrode materials is that in an air environment and an environment with a small amount of water, iron and manganese will be quickly oxidized, causing a decline in the electrical properties of the materials. In contrast, in the present disclosure Na₂Ti₃O₇ and Na₃V₂(BO₃)₃ are used to coat the surface of NaMBOs, which can isolate Na(Mn,Fe)BO₃, avoiding the rapid fading in capacity of such materials, at the same time since the prices of manganese and iron are much lower than those of elements such as vanadium, etc., the price of products of the present disclosure is relatively low. Moreover, the surface coating materials of the present disclosure are Na₂Ti₃O₇ and Na₃V₂(BO₃)₃, which can greatly enhance the oxidation and moisture resistance of the materials, and further improve the ion conductivity of the products. At the same time, further introducing a carbon coating layer can improve the electronic conductivity, meanwhile it can act as a second protective layer to further improve the stability of the materials.

### Brief Description of the Drawings

Figure 1 shows an SEM image of the washed and oven-dried material prepared in Example 1 of the present invention;
Figure 2 shows an SEM image of the ferromanganese oxalate prepared in Example 1 of the present disclosure;
Figure 3 shows an SEM image of the first calcined material prepared in Example 1 of the present disclosure;
Figure 4 shows an SEM image of the sodium battery cathode electrode material prepared in Example 1 of the present disclosure;
Figure 5 shows a transmission electron microscopy (TEM) image of the sodium battery cathode electrode material prepared in Example 1 of the present disclosure;
Figure 6 shows a charge and discharge graph of the sodium battery cathode electrode material prepared in Example 1 of the present disclosure; and
Figure 7 shows the cycle performance test results of the batteries assembled by the sodium battery cathode electrode material prepared in Example 1 of the present disclosure.

### Detailed Description of the Embodiments

The present disclosure provides a sodium battery cathode electrode material, which has a chemical formula as follows:

xNaMBO₃.yNa₂Ti₃O₇.zNa₃V₂(BO₃)₃/C;

wherein, the mole number ratio of x to y to z is 0.94-0.96:0.02-0.03:0.02-0.03;
M is Fe and Mn, and the mole number ratio of Fe to Mn is 8-9:1-2; and
the mass fraction of carbon in the sodium battery cathode electrode material is 1.2% to 1.5%.

Preferably, the mole number ratio of x to y to z is 0.94:0.03:0.03, 0.95:0.025:0.025, 0.96:0.02:0.02, or any value ranging from 0.94-0.96:0.02-0.03:0.02-0.03.

The mole number ratio of Fe to Mn is 8:2, 8.5:1.5, 9:1, or any value ranging from 8-9:1-2.

The mass fraction of carbon in the sodium battery cathode electrode material is 1.2%, 1.3%, 1.4%, 1.5%, or any value ranging from 1.2% to 1.5%.

In the presentdisclosure, the sodium battery cathode electrode material includes a core material and a first and second coating layers sequentially coated on the surface of the core material. The core material is NaMBO₃, the first coating layer includes Na₂Ti₃O₇ and Na₃V₂(BO₃)₃, and the second coating layer is amorphous carbon.

In some specific embodiments of the present disclosure, the particle size of the core material is 200 nm to 500 nm, preferably 200 nm, 300 nm, 400 nm, 500 nm, or any value ranging from 200 nm to 500 nm; the thickness of the first coating layer is 10 nm to 20 nm, preferably 10 nm, 12 nm, 14 nm, 16 nm, 18 nm, 20 nm, or any value ranging from 10 nm to 20 nm, and the thickness of the second coating layer is 1.5 nm to 3.5 nm, preferably 1.5 nm, 2.0 nm, 2.5 nm, 3.0 nm, 3.5 nm, or any value ranging from 1.5 nm to 3.5 nm.

The present disclosure also provides a preparation method of the above sodium battery cathode electrode material including the following steps:
A) mixing a ferrous salt, a manganese salt, and water to obtain a ferromanganese mixed solution;
   mixing the ferromanganese mixed solution with the ammonium bicarbonate solution for reaction to obtain a reaction product;
B) adding the reaction product to a hydrazine hydrate solution for slurrying and to an oxalic acid solution for precipitation sequentially, and adjusting the pH of the solution to obtain ferromanganese oxalate;
C) mixing the ferromanganese oxalate with sodium borate and sodium bicarbonate, then adding sodium hexametaphosphate solution for slurrying, grinding same and then spray drying to obtain a material, calcining the obtained material in an inert atmosphere to obtain the first calcined material; and
D) mixing sodium metavanadate, sodium borate, titanium dioxide, sodium stearate, the first calcined material and water, grinding same and then spray drying, after which performing a secondary calcining to obtain a calcined product, sieving the calcined product for iron removal to obtain the sodium battery cathode electrode material.

Specifically, in the present disclosure, ferrous and manganese salts are first added into pure water, dissolved under stirring to obtain a ferromanganese mixed solution.

Wherein, the ferrous salt is selected from ferrous sulfate crystal; and the manganese salt is selected from manganese sulfate crystal.

An ammonium bicarbonate solution with a concentration of 1.5 mol/L to 1.8 mol/L is prepared, wherein the concentration of the ammonium bicarbonate solution is preferably 1.5 mol/L, 1.6 mol/L, 1.7 mol/L, 1.8 mol/L, or any value ranging from 1.5 mol/L to 1.8 mol/L.

There are no special limitations on the preparation sequence of the ferromanganese mixed solution and the ammonium bicarbonate solution.

The ferromanganese mixed solution and the ammonium bicarbonate solution are added together into the reactor in a time period of 60 minutes to 90 minutes, preferably of 60 minutes, 70 minutes, 80 minutes, 90 minutes, or any value ranging from 60 minutes to 90 minutes. The materials are added at a reaction temperature of 35°C to 45°C, preferably 35°C, 38°C, 40°C, 42°C, 45°C, or any value ranging from 35°C to 45°C. The ratio of the molar weight of the ammonium bicarbonate to the total molar weight of manganese and iron in the ferrous and manganese salts is 2.2-2.5:1, preferably 2.2:1, 2.3:1, 2.4:1, 2.5:1, or any value ranging from 2.2-2.5:1.

After the materials are added, a pH regulator is added to adjust the pH of the slurry to 7.3-7.5, preferably 7.3, 7.4, 7.5, or any value ranging from 7.3-7.5. The slurry is heated to 60-65°C, preferably 60°C, 61°C, 62°C, 63°C, 64°C, 65°C, or any value ranging from 60-65°C, and then the reaction is proceeded for 15 minutes to 30 minutes to obtain the reacted materials.

The reacted materials are filtered and washed to obtain the washed material, which is the reaction product. There are no special limitations on the filtering and washing methods in the present disclosure, and any methods well-known to those skilled in the art can be used.

Next, in the present disclosure, the reaction product is added to a hydrazine hydrate solution, stirred and slurried, wherein the concentration of the hydrazine hydrate solution is 0.05 mol/L to 0.1 mol/L, preferably 0.05 mol/L, 0.06 mol/L, 0.07 mol/L, 0.08 mol/L, 0.09 mol/L, 0.10 mol/L, or any value ranging from 0.05 mol/L to 0.1 mol/L, and the mass ratio of the reaction product to the hydrazine hydrate is 1 :1.5-2, preferably 1 :1.5, 1:1.6, 1:1.7, 1:1.8, 1:1.9, 1:2.0, or any value ranging from 1:1.5-2.

Then, an oxalic acid solution is added, the temperature of the solution is maintained at 40°C to 50°C, the pH of the solution is adjusted to 4-5, preferably 4, 4.2, 4.4, 4.6, 4.8, 5, or any value ranging from 4-5. Then, the addition of oxalic acid is stopped, the reaction is continuously stirred for 15 minutes to 30 minutes, and then filtered and washed to obtain the precipitated material, which is dried to obtain the ferromanganese oxalate. The concentration of the oxalic acid solution is 0.2 mol/L to 0.5 mol/L, preferably 0.2 mol/L, 0.3 mol/L, 0.4 mol/L, 0.5 mol/L, or any value ranging from 0.2 mol/L to 0.5 mol/L.

After the ferromanganese oxalate is obtained, the ferromanganese oxalate is mixed with sodium borate and sodium bicarbonate, then sodium hexametaphosphate solution is added for slurrying, the obtained slurry is ground and then spray dried to obtain a material, which is calcined in an inert atmosphere to obtain the first calcined material.

Wherein, the molar ratio of ferromanganese oxalate to sodium borate to sodium bicarbonate is 4:1.02-1.03:2.02-2.04, preferably 4:1.02:2.02, 4:1.03:2.04, 4:1.025:2.03, or any value ranging from 4:1.02-1.03:2.02-2.04.

The concentration of sodium hexametaphosphate solution is 0.02 mol/L to 0.05 mol/L, preferably 0.02 mol/L, 0.03 mol/L, 0.04 mol/L, 0.05 mol/L, or any value ranging from 0.02 mol/L to 0.05 mol/L.

The mass of sodium hexametaphosphate solution is 2 to 2.5 times the total mass of the added ferromanganese oxalate, sodium borate, and sodium bicarbonate, preferably 2 times, 2.1 times, 2.2 times, 2.3 times, 2.4 times, 2.5 times, or any value ranging from 2 times to 2.5 times.

The grinding involves grinding the slurry to a particle size of 0.2 µm to 0.3 µm, preferably 0.2 µm, 0.25 µm, 0.3 µm, or any value ranging from 0.2 µm to 0.3 µm.

During the spray drying process, the final spray dried material is maintained at a particle size of 10 µm to 30 µm, preferably 10 µm, 15 µm, 20 µm, 25 µm, 30 µm, or any value ranging from 10 µm to 30 µm, and a water content of less than 1 wt%.

During the calcination process, the calcination atmosphere is at least one of carbon dioxide, nitrogen and argon, the temperature is raised to 450-500°C at a heating rate of 80°C/h to 100°C/h for calcining 3 hours to 5 hours, and then the material is cooled at a cooling rate of 100°C/h to 150°C/h to a temperature of less than or equal to 50°C and discharged, the first calcined product is sealed and preserved in a nitrogen environment. Wherein, the heating rate is preferably 80°C/h, 85°C/h, 90°C/h, 95°C/h, 100°C/h, or any value ranging from 80°C/h to 100°C/h, the calcination temperature is preferably 450°C, 460°C, 470°C, 480°C, 490°C, 500°C, or any value ranging from 450°C to 500°C, and the calcination time is preferably 3 hours, 4 hours, 5 hours, or any value ranging from 3 hours to 5 hours. The cooling rate is preferably 100°C/h, 110°C/h, 120°C/h, 130° C/h, 140° C/h, 150° C/h, or any value ranging from 100° C/h to 150° C/h.

Finally, sodium metavanadate, sodium borate, titanium dioxide, sodium stearate, the first calcined material and water are mixed, ground and spray dried, then a secondary calcining is performed to obtain a calcined product, which is sieved for iron removal to obtain the sodium battery cathode electrode material.

Specifically, sodium metavanadate, sodium borate, titanium dioxide, and sodium stearate are mixed, and then water is added for slurrying to obtain a mixed slurry with a solid content of 1 wt% to 3 wt%, preferably 1 wt%, 2 wt%, 3 wt%, or any value ranging from 1 wt% to 3 wt%.

Next, the first calcined material is added and mixed to obtain the mixed slurry.

Wherein, the molar ratio of the first calcined material to sodium metavanadate, sodium borate, titanium dioxide, and sodium stearate is 0.94-0.96:0.04-0.06:0.015-0.0225:0.06-0.09:0.03-0.045. Preferably, 0.95:0.05:0.02:0.08:0.04, 0.94:0.06:0.015:0.06:0.03, 0.96:0.04:0.0225:0.09:0.045, or any value ranging from 0.94-0.96:0.04-0.06:0.015-0.0225:0.06-0.09:0.03-0.045 .

The titanium dioxide is a nano titanium dioxide with a primary particle size of 15 nm to 50 nm, preferably 15 nm, 20 nm, 30 nm, 40 nm, 50 nm, or any value ranging from 15 nm to 50 nm, the BET of which is 20 m²/g to 40 m²/g, preferably 20 m²/g, 30 m²/g, 40 m²/g, or any value ranging from 20 m²/g to 40 m²/g, and the purity is greater than or equal to 99 wt%.

After the mixed slurry is obtained, it is ground to a particle size of 200 nm to 250 nm, preferably 200 nm, 210 nm, 220 nm, 230 nm, 240 nm, 250 nm, or any value ranging from 200 nm to 250 nm.

Then, spray drying is carried out to obtain the spray dried material. During the spray drying process, the final spray dried material is maintained at a water content of less than 0.5 wt% and a particle size of 3 µm to 10 µm, preferably 3 µm, 5 µm, 5.8 µm, 8 µm, 10 µm, or any value ranging from 3 µm to 10 µm.

Then, the spray dried material is subjected to secondary calcining. The secondary calcining process involves: a sintering atmosphere of nitrogen or argon gas; a heating rate of 50° C/h to 80° C/h, preferably 50° C/h, 60° C/h, 70° C/h, 80° C/h, or 50° C/h to 80° C/h; a heat preservation temperature of 650° C to 700° C, preferably 650° C, 660° C, 670° C, 680° C, 690° C, 700° C, or any value ranging from 650° C to 700° C; and a heat preservation time of 4 hours to 8 hours, preferably 4 hours, 5 hours, 6 hours, 7 hours, 8 hours, or any value ranging from 4 hours to 8 hours; wherein the calcination process is carried out using a roller-hearth furnace, which is connected to a variable frequency induced draft fan, the furnace pressure inside the roller-hearth furnace is controlled to be 60 Pa to 100 Pa higher than the external atmospheric pressure, and the humidity in the heat preservation section is controlled to be less than or equal to 5% and the cooling rate in the cooling section is 100° C/h to 150 ° C/h, preferably 100° C/h, 110° C/h, 120° C/h, 130° C/h, 140° C/h, 150° C/h, or any value ranging from 100° C/h to 150 ° C/h.

After the secondary calcining process, the sodium battery cathode electrode material is obtained by sieving for iron removal and vacuum packaging. The iron removal by sieving adopts electromagnetic iron removal, and the demagnetization is stopped when the iron removal reaches the magnetic material of the product is less than or equal to 300 ppb, the sieving is carried out using a 100 to 150 mesh sieve. A vacuum packaging process is also included after the iron removal by sieving process, which is carried out in a constant temperature and humidity room at a temperature of 15° C to 25° C and a humidity of 5% to 10%.

In the present disclosure, Na(Mn,Fe)BO₃ is first prepared with an oxalate, the stability of oxalate, i.e. ferrous oxalate is relatively high, which can be used to prepare relatively pure Na(Mn,Fe)BO₃. Moreover, in the present disclosure, a carbon coating layer is not introduced in this step, the main purpose of which is to prepare for the subsequent coating, because once a carbon coating layer is introduced in this step, Na₂Ti₃O₇and Na₃V₂(BO₃)₃ will be isolated and prevented from being coated on Na(Mn,Fe)BO₃, and because the carbon layer has the function of isolating the growth among particles, in the first step of the sintering process of the present disclosure, a carbon layer is not introduced, so that Na₂Ti₃O₇ and Na₃V₂(BO₃)₃ can well grow on Na(Mn,Fe)BO₃.

In the second stage of the present disclosure, Na(Mn,Fe)BO₃ is nanosized and acted as a core by nano-grinding. At the same time, water soluble raw materials such as sodium metavanadate, sodium borate and sodium stearate, etc., are introduced, and then the water soluble raw materials can be separated out by crystallization and coated on the surface of solid particles by a spray drying mode. At the same time, an organic carbon chain is introduced into the sodium salt of the present disclosure, which is then thermally decomposed and carbonized in an inert atmosphere to form a carbon coating layer. A stable and uniform coating layer can be well formed by adopting this method in the present disclosure, and the coating layer of the present disclosure still has a certain capacity utilization, and then a carbon coating layer is further formed on its outer surface to form a structure, which can greatly improve the stability of the material. At the same time, the capacity utilization is high, and low-cost raw materials are used, further reducing the cost.

The present disclosure also provides a sodium battery including the above sodium battery cathode electrode material.

The sodium battery cathode electrode material provided by the present disclosure is high in capacity, high in voltage platform, stable in structure and high in cycle performance, and the preparation method is simple, low in cost and short in process flow. The present disclosure uses borate as the anion, which has the advantage of lower price than phosphate, the price of sodium borate is about 3,000 yuan/ton, while the price of sodium phosphate is more than 6,000 yuan/ton. At the same time, because the mole number of borate radical is smaller than that of phosphate radical, the theoretical capacity of the borate type cathode electrode material is higher than that of the phosphate type cathode electrode material in terms of the theoretical capacity of the final prepared product. The present disclosure uses Na₂Ti₃O₇ and Na₃V₂(BO₃)₃ to coat the surface of NaMBOs, with C coated on the surface of Na₂Ti₃O₇ and Na₃V₂(BO₃)₃, and the carbon being amorphous carbon . The main problem with the borate series cathode electrode materials is that in an air environment and an environment with a small amount of water, iron and manganese will be quickly oxidized, causing a decline in the electrical properties of the materials. In contrast, in the present disclosure Na₂Ti₃O₇ and Na₃V₂(BO₃)₃ are used to coat the surface of NaMBOs, which can isolate Na(Mn,Fe)BO₃, avoiding the rapid fading in capacity of such materials, at the same time since the prices of manganese and iron are much lower than those of elements such as vanadium, etc., the price of products of the present disclosure is relatively low. Moreover, the surface coating materials of the present disclosure are Na₂Ti₃O₇ and Na₃V₂(BO₃)₃, which can greatly enhance the oxidation and moisture resistance of the materials, and further improve the ion conductivity of the products. At the same time, further introducing a carbon coating layer can improve the electronic conductivity, meanwhile it can act as a second protective layer to further improve the stability of the materials.

In order to further understand the present disclosure, the sodium battery cathode electrode material and preparation method and application thereof provided by the present disclosure will be explained below in conjunction with examples. The scope of protection of the present disclosure is not limited by the following examples.

### Example 1

A high-performance sodium battery cathode electrode material of the following structure:

0.95Na(Fe_{0.85},Mn_{0.15})BO₃·0.025Na₂Ti₃O₇·0.025Na₃V₂(BO₃)₃/C;

wherein, the mass fraction of the carbon content was 1.4%.
Na₂Ti₃O₇ and Na₃V₂(BO₃)₃ were coated on the surface of NaMBOs, with C coated on the surface of Na₂Ti₃O₇ and Na₃V₂(BO₃)₃, and the carbon being amorphous carbon.

The preparation method was as follows:
1) battery-grade ferrous sulfate crystal and manganese sulfate crystal were added to pure water, dissolved under stirring to obtain the ferromanganese mixed solution, with the molar ratio of iron to manganese in the mixed solution being 0.857:0.143, and the pH being 2.15;
   then a 1.72 mol/L of ammonium bicarbonate solution was prepared, the ferromanganese mixed solution and the ammonium bicarbonate solution were added together into the reactor in a time period of 85 minutes, with the ratio of the mole number of the added ammonium bicarbonate to the total mole number of manganese and iron being 2.4:1, and the materials were added at the reaction temperature of 42±1.5° C, the stirring speed of the entire process was 400±20 r/min. After the addition of materials was completed, the pH of the solution was 7.25, then sodium carbonate was added to adjust the pH of the slurry to 7.35, and heated up to 62 ± 1° C, and reacted continuously for 25 minutes to obtain the reacted materials;
   the reacted materials were sampled to detect the particle size, with the particle size of 1.75 µm for D10, 6.59 µm for D50, and 15.43 µm for D90 being obtained.

The reacted materials were filtered and washed to obtain the washed material, which was oven-dried in a vacuum drying oven, then pulverized, and detected to obtain its data. The results are shown in Table 1:

**Table 1**

| Indexes | D10 | D50 | D90 | BET |
|---|---|---|---|---|
| Data | 1.97 µm | 7.68 µm | 18.56 µm | 19.6 m²/g |
| Indexes | Mn | Fe | C | Bulk density |
| Data | 7.13% | 41.01% | 10.32% | 0.59 g/mL |

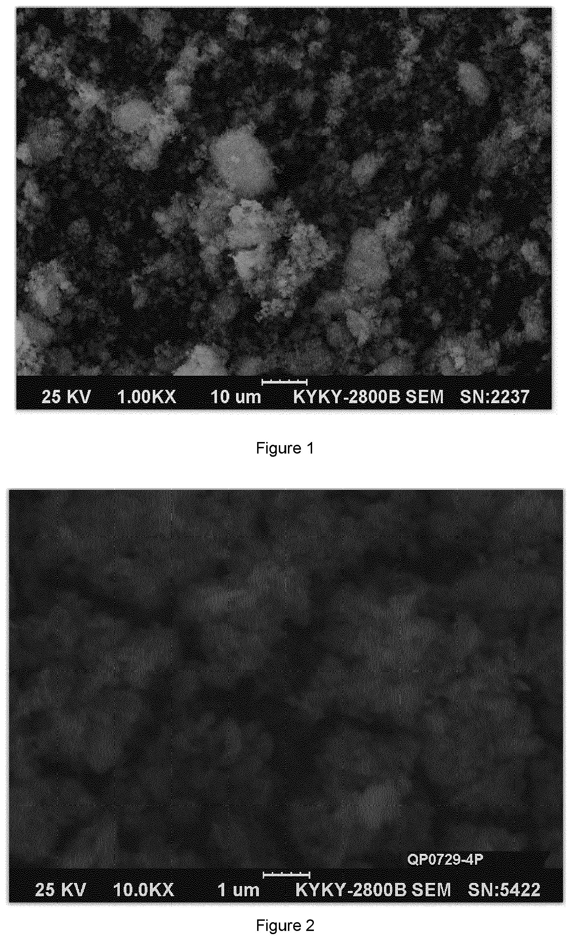

Referring to Figure 1, which shows an SEM image of the washed and oven-dried material prepared in Example 1 of the present disclosure.

2) The washed material was added to the hydrazine hydrate solution, with the mass ratio of the washed material to the hydrazine hydrate solution being 1:1.83, and the concentration of the added hydrazine hydrate solution being 0.072mol/L, which was stirred and slurried, and then an oxalic acid solution with a concentration of 0.37 mol/L was added, the temperature of the solution was maintained at 46 ± 1° C, the addition of oxalic acid was stopped when the pH of the solution was adjusted to 4.38, the solution was stirred and reacted continuously for 20 minutes, then filtered and washed to obtain the precipitated material, which was oven-dried to obtain ferromanganese oxalate, the SEM of which is as shown in Figure 2. Figure 2 shows an SEM image of the ferromanganese oxalate prepared in Example 1 of the present disclosure.

The ferromanganese oxalate was detected, and the results are shown in Table 2.

**Table 2**

| Indexes | Mn | Fe | C | D50 |
|---|---|---|---|---|
| Data | 4.52% | 26.47% | 13.21% | 4.85 µm |
| Bulk density | Fe³⁺ | Ca | Mg | Na |
| 0.61 g/mL | 147 ppm | 31.4 ppm | 17.9 ppm | 24.7 ppm |

3) The ferromanganese oxalate was mixed with sodium borate and sodium bicarbonate, and then sodium hexametaphosphate solution was added for slurrying, with the molar ratio of ferromanganese oxalate, sodium borate, and sodium bicarbonate being 4:1.025:2.03, the mass of the added sodium hexametaphosphate solution being 2.3 times the total mass of the added ferromanganese oxalate, sodium borate and sodium bicarbonate, and the concentration of the sodium hexametaphosphate solution being 0.03 mol/L, the slurry was ground until the particle size of the slurry was 0.253 µm, then spray dried. During the spray drying process, the final spray dried material was maintained at a particle size of 17.8 µm and a water content of 0.35 wt%, the obtained material was calcined under an inert atmosphere at a temperature of 480° C for 4 hours, then taken out to obtain the first calcined material. During the calcination process, the heating rate was 90° C/h, the calcination atmosphere was nitrogen, and the cooling rate in the cooling section was 145° C/h, the material was discharged after it was cooled to a temperature of less than or equal to 50° C to obtain the first calcined material, and the discharged material was sealed and preserved in a nitrogen environment.

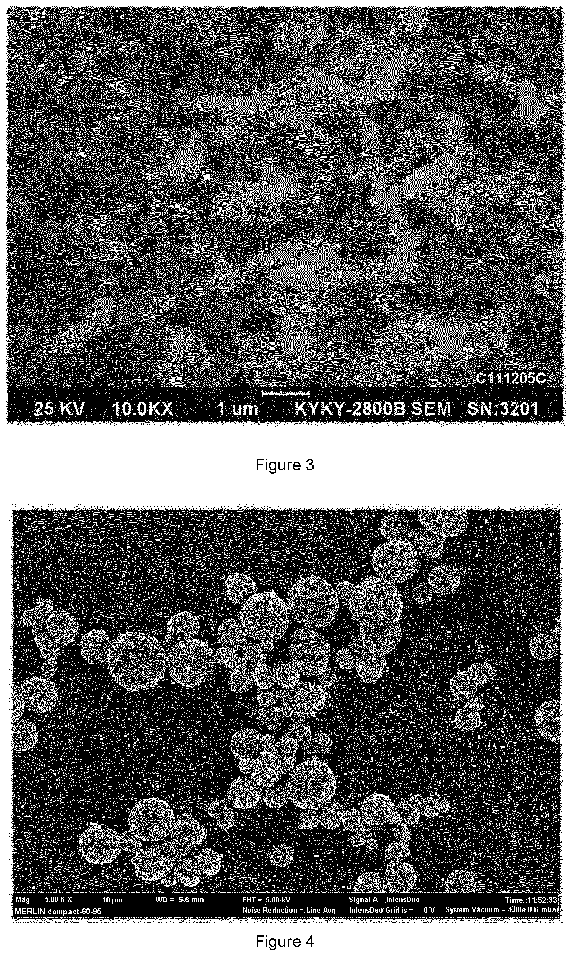

Referring to Figure 3, which shows an SEM image of the first calcined material prepared in Example 1 of the present disclosure.

The first calcined material was detected, and the results are shown in Table 3.

**Table 3**

| Indexes | Na | Mn | Fe | B | D10 |
|---|---|---|---|---|---|
| Data | 16.92% | 5.91% | 34.62% | 7.72% | 0.35µm |
| D50 | D90 | Bulk density | Compact density | Magnetic foreign body | Fe³⁺ |
| 1.89 µm | 3.59 µm | 0.89 g/mL | 3.4 g/mL | 0.35 ppm | 315 ppm |

4) The sodium metavanadate, sodium borate, titanium dioxide, and sodium stearate were mixed together, then water was added and slurried to give the solid content of 1.7 wt%, the first calcined material was added, with the molar ratio of the first calcined material to the sodium metavanadate, sodium borate, titanium dioxide, and sodium stearate being 0.95:0.05:0.02:0.08:0.04, and then the material was ground to a particle size of 230 nm, and then spray dried. During the spray drying process, the final spray dried material was maintained at a water content of less than 0.5 wt% and a particle size of 5.8 µm.

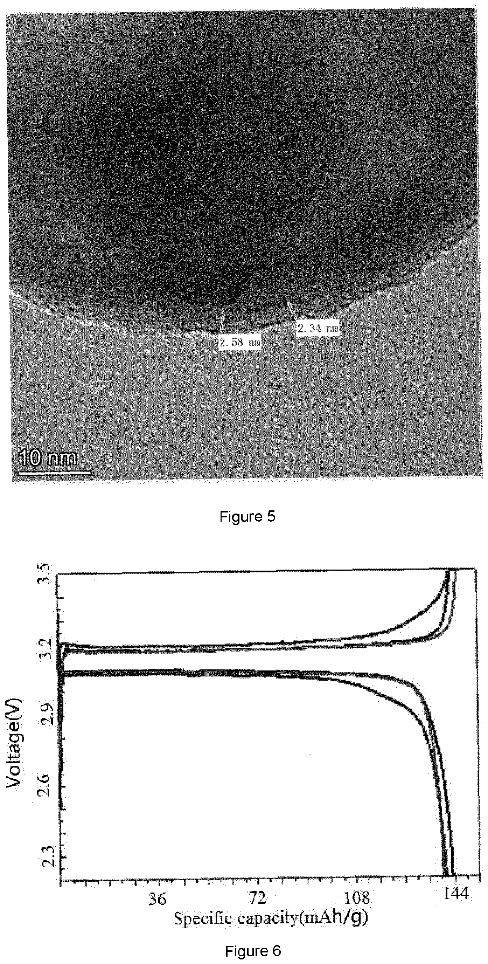

The spray dried material was put into the roller-hearth furnace for secondary calcining. During the secondary calcining process, the sintering atmosphere was nitrogen, the heating rate was 75° C/h, the heat preservation temperature was 680° C, and the heat preservation time was 6 hours. The calcination process was carried out using a roller-hearth furnace, which was connected to a variable frequency induced draft fan, the furnace pressure inside the roller-hearth furnace was controlled to be 80 Pa higher than the external atmospheric pressure, and the humidity in the heat preservation section was controlled to be less than or equal to 5% and the cooling rate in the cooling section was 120° C/h. After the secondary calcining, a vacuum packaging process was performed in a constant temperature and humidity room at a temperature of 20±1° C and a humidity of 8.1% after the iron removal by sieving process, it is needed to conduct electromagnetic iron removal for the sieved material before vacuum packaging, and the demagnetization was stopped when the iron removal reached the magnetic material of the product was 215 ppb, the sieving was carried out using a 150 mesh sieve to obtain the sodium battery cathode electrode material, as shown in Figures 4 and 5. Figure 4 shows an SEM image of the sodium battery cathode electrode material prepared in Example 1 of the present disclosure. Figure 5 shows a transmission electron microscopy (TEM) image of the sodium battery cathode electrode material prepared in Example 1 of the present disclosure. As shown in Figure 5, a carbon coating layer with a thickness of 2.5 ± 1 nm was formed on the surface of the prepared sodium battery cathode electrode material.

The titanium dioxide was a nano titanium dioxide with a primary particle size of 30 nm, a BET of 31.5 m²/g, and a purity of 99.53 wt%.

The sodium battery cathode electrode material was detected, and the results are shown in Table 4.

**Table 4**

| Indexes | Na | Mn | Fe | B | Ti | V |
|---|---|---|---|---|---|---|
| Data | 16.74% | 5.61% | 31.95% | 7.63% | 2.01% | 1.74% |
| C | pH | Internal resistance of powder | BET | Compact density | Magnetic foreign body | Iron dissolution |
| 1.4% | 10.87 | 24.8 Ω.cm | 17.9 m²/g | 2.37 g/mL | 0.215 ppm | 10.4 ppm |
| D10 | D50 | D90 | D99 | D100 | Free sodium | Fe³⁺ |
| 1.6 µm | 6.1 µm | 27.3 µm | 29.6 µm | 34.1 µm | 379 ppm | 27.8 ppm |
| Initial charge capacity at 0.1C | Initial discharge capacity at 0.1C | Initial discharge efficiency | Voltage platform | Initial charge capacity at 1C | Capacity retention rate at - 20° C | Tap density |
| 146.9 mAh/g | 142.1 mAh/g | 96.7% | 3.1 V | 139.8 mAh/g | 80.3% | 1.32 g/mL |

The charge and discharge curve of the obtained sodium battery cathode electrode material product is as shown in Figure 6, which shows a charge and discharge graph of the sodium battery cathode electrode material prepared in Example 1 of the present disclosure. The button battery test was used, the anode electrodewas a sodium piece, and the formula for the cathode electrode was a mass ratio of 85:5:10 of a sodium battery cathode electrode material: PVDF: SP, the electrolyte in the electrolyte solution was sodium hexafluorophosphate with a concentration of 0.45 mol/L, and the solvent was EC+DMC+EMC with a mass ratio of 5:2:3, three button batteries were made for a same batch of materials, and charge and discharge at 0.1C rate were used. It can be seen from Figure 6 that the charge capacity reached 146.9 mAh/g and the discharge capacity reached 142.1 mAh/g, which were close to the electrochemical performance of lithium iron phosphate. Moreover, the discharge capacity at 1C was 139.8 mAh/g, which was comparable to conventional lithium iron phosphate, the electrical performance was excellent. It can be seen from the charge and discharge curve that the discharge plateau is flat and the polarization is small.

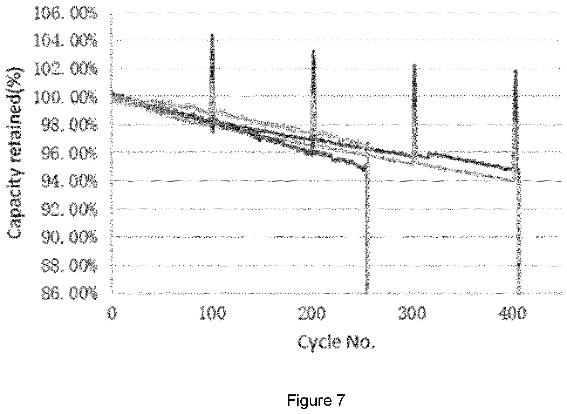

The cycle performance of the obtained sodium battery cathode electrode material product was tested, and four battery cells were made for the same material. Specifically, the cathode electrodematerial prepared in Example 1 was used as the cathode electrode active material, and the cathode electrode piece was prepared with a mass ratio of 85:5:10 of the sodium battery cathode electrode active material: PVDF: SP, and a anode electrode piece was prepared with hard carbon as the anodeelectrode, and a pouch battery cell was assembled with sodium hexafluorophosphate of a concentration of 0.45 mol/L as the electrolyte and a mass ratio of 5:2:3 of EC+DMC+EMC as the solvent. The cycle performance at a rate of 1C at a temperature of 25° C and a capacity of 1Ah is shown in Figure 7, which shows the cycle performance test results of the batteries assembled by the sodium battery cathode electrode material prepared in Example 1 of the present disclosure. As can be known from Figure 7 that at circle 250, cycle capacity retention rate at normal temperature is higher than 95%, indicating excellent cycle performance.

At the same time, based on the current price (the price of lithium carbonate is 485,000 yuan/ton), the cost price of lithium iron phosphate is approximately 150,000 yuan/ton. However, when the material of the present disclosure is used, the cost price of which is only 35,000 yuan/ton, which is very cost-effective, furthermore the capacity of which is 20 mAh/g to 40 mAh/g higher than other polyanionic materials such as sodium iron sulfate and sodium iron phosphate, etc. Moreover, the present material has excellent cycle performance, and low-temperature performance, etc.

### Example 2

A) A ferrous salt, a manganese salt, and water were mixed to obtain a ferromanganese mixed solution;
   the ferromanganese mixed solution was mixed with the ammonium bicarbonate solution for reaction to obtain a reaction product;
B) the reaction product was added to a hydrazine hydrate solution for slurrying and to an oxalic acid solution for precipitation sequentially, and the pH of the solution was adjusted to obtain ferromanganese oxalate;
C) the ferromanganese oxalate was mixed with sodium borate and sodium bicarbonate, then sodium hexametaphosphate solution was added for slurrying, the slurry was ground and then spray dried to obtain a material, the obtained material was calcined in an inert atmosphere to obtain the first calcined material; and
D) the sodium metavanadate, sodium borate, titanium dioxide, sodium stearate, the first calcined material and water were mixed and ground and then spray dried, after which a secondary calcining was performed to obtain a calcined product, which was sieved for iron removal to obtain the sodium battery cathode electrode material.

In step A), the ferrous salt was selected from ferrous sulfate crystal;
the manganese salt was selected from manganese sulfate crystal;
the concentration of the ammonium bicarbonate solution was 1.5 mol/L;
the ratio of the molar weight of the ammonium bicarbonate to the total molar weight of manganese and iron in the ferrous and manganese salts was 2.2:1; and
after the ferromanganese mixed solution was mixed with the ammonium bicarbonate solution, a pH regulator was added to adjust the pH of the slurry to 7.3, and the stirring speed of the entire process was 300 r/min.

In step B), the concentration of hydrazine hydrate solution was 0.05 mol/L;
the mass ratio of the reaction product to the hydrazine hydrate was 1:1.5;
the concentration of the oxalic acid solution was 0.2 mol/L; and
the pH of the solution was adjusted to 4.

In step C), the molar ratio of ferromanganese oxalate to sodium borate to sodium bicarbonate was 4:1.02:2.02;
the mass of sodium hexametaphosphate solution was 2 times the total mass of the added ferromanganese oxalate, sodium borate, and sodium bicarbonate;
the concentration of sodium hexametaphosphate solution was 0.02 mol/L;
the slurry was ground to a particle size of 0.2 µm;
during the spray drying process, the final spray dried material was maintained at a particle size of 10 µm, and a water content of less than 1 wt%, and
during the calcination process, the calcination atmosphere was at least one of carbon dioxide, nitrogen and argon, the temperature was raised to 450° C at a heating rate of 80°C/h for calcining 3 hours, and then the material was cooled at a cooling rate of 100°C/h to a temperature of less than or equal to 50°C and discharged, the first calcined product was sealed and preserved in a nitrogen environment.

In step D), the molar ratio of the first calcined material to sodium metavanadate, sodium borate, titanium dioxide, and sodium stearate was 0.94:0.04:0.015:0.06:0.03.

The titanium dioxide was a nano titanium dioxide with a primary particle size of 15 nm, a BET of 20 m²/g, and a purity of greater than or equal to 99 wt%.

In step D), the mixing method involved:
mixing sodium metavanadate, sodium borate, titanium dioxide, and sodium stearate, and then adding water for slurrying to obtain a mixed slurry with a solid content of 1 wt%, followed by adding the first calcined material and mixing same to obtain the mixed slurry;
the grinding involved grinding the material to a particle size of 200 nm;
during the spray drying process, the final spray dried material was maintained at a water content of less than 0.5 wt% and a particle size of 3 µm;
the secondary calcining process involved: a sintering atmosphere of nitrogen or argon gas; a heating rate of 50°C/h, a heat preservation temperature of 650°C, and a heat preservation time of 4 hours, wherein the calcination process was carried out using a roller-hearth furnace, which was connected to a variable frequency induced draft fan, the furnace pressure inside the roller-hearth furnace was controlled to be 60 Pa higher than the external atmospheric pressure, and the humidity in the heat preservation section was controlled to be less than or equal to 5% and the cooling rate in the cooling section was 100°C/h; and
the iron removal by sieving adopted electromagnetic iron removal, and the demagnetization was stopped when the iron removal reached the magnetic material of the product was less than or equal to 300 ppb, the sieving was carried out using a 100 mesh sieve.

A vacuum packaging process was also included after the iron removal by sieving process, which was carried out in a constant temperature and humidity room at a temperature of 15°C and a humidity of 5%.

### Example 3

A) A ferrous salt, a manganese salt, and water were mixed to obtain a ferromanganese mixed solution;
   the ferromanganese mixed solution was mixed with the ammonium bicarbonate solution for reaction to obtain a reaction product;
B) the reaction product was added to a hydrazine hydrate solution for slurrying and to an oxalic acid solution for precipitation sequentially, and the pH of the solution was adjusted to obtain ferromanganese oxalate;
C) the ferromanganese oxalate was mixed with sodium borate and sodium bicarbonate, then sodium hexametaphosphate solution was added for slurrying, the slurry was ground and then spray dried to obtain a material, the obtained material was calcined in an inert atmosphere to obtain the first calcined material; and
D) the sodium metavanadate, sodium borate, titanium dioxide, sodium stearate, the first calcined material and water were mixed and ground and then spray dried, after which a secondary calcining was performed to obtain a calcined product, which was sieved for iron removal to obtain the sodium battery cathode electrode material.

In step A), the ferrous salt was selected from ferrous sulfate crystal;
the manganese salt is selected from manganese sulfate crystal;
the concentration of the ammonium bicarbonate solution was 1.8 mol/L;
the ratio of the molar weight of the ammonium bicarbonate to the total molar weight of manganese and iron in the ferrous and manganese salts was 2.5:1; and
after the ferromanganese mixed solution was mixed with the ammonium bicarbonate solution, a pH regulator was added to adjust the pH of the slurry to 7.5, and the stirring speed of the entire process was 500 r/min.

In step B), the concentration of hydrazine hydrate solution was 0.1mol/L;
the mass ratio of the reaction product to the hydrazine hydrate was 1:2;
the concentration of the oxalic acid solution was 0.5mol/L; and
the pH of the solution was adjusted to 5.

In step C), the molar ratio of ferromanganese oxalate to sodium borate to sodium bicarbonate was 4:1.03:2.04;
the mass of sodium hexametaphosphate solution was 2.5 times the total mass of the added ferromanganese oxalate, sodium borate, and sodium bicarbonate;
the concentration of sodium hexametaphosphate solution was 0.05mol/L;
the slurry was ground to a particle size of 0.3 µm;
during the spray drying process, the final spray dried material was maintained at a particle size of 30 µm, and a water content of less than 1 wt%, and
during the calcination process, the calcination atmosphere was at least one of carbon dioxide, nitrogen and argon, the temperature was raised to 500°C at a heating rate of 1 00°C/h for calcining 5 hours, and then the material was cooled at a cooling rate of 150°C/h to a temperature of less than or equal to 50°C and discharged, the first calcined product was sealed and preserved in a nitrogen environment.

In step D), the molar ratio of the first calcined material to sodium metavanadate, sodium borate, titanium dioxide, and sodium stearate was 0.96:0.06: 0.0225: 0.09: 0.045.

The titanium dioxide was a nano titanium dioxide with a primary particle size of 50 nm, a BET of 40 m²/g, and a purity of greater than or equal to 99 wt%.

In step D), the mixing method involved:
mixing sodium metavanadate, sodium borate, titanium dioxide, and sodium stearate, and then adding water for slurrying to obtain a mixed slurry with a solid content of 3 wt%, followed by adding the first calcined material and mixing same to obtain the mixed slurry;
the grinding involved grinding the material to a particle size of 250 nm;
during the spray drying process, the final spray dried material was maintained at a water content of less than 0.5 wt% and a particle size of 10 µm;
the secondary calcining process involved: a sintering atmosphere of nitrogen or argon gas; a heating rate of 80°C/h, a heat preservation temperature of 700°C, and a heat preservation time of 8 hours, wherein the calcination process was carried out using a roller-hearth furnace, which was connected to a variable frequency induced draft fan, the furnace pressure inside the roller-hearth furnace was controlled to be 100 Pa higher than the external atmospheric pressure, and the humidity in the heat preservation section was controlled to be less than or equal to 5% and the cooling rate in the cooling section was 150°C/h; and
the iron removal by sieving adopted electromagnetic iron removal, and the demagnetization was stopped when the iron removal reached the magnetic material of the product was less than or equal to 300 ppb, the sieving was carried out using a 150 mesh sieve.

A vacuum packaging process was also included after the iron removal by sieving process, which was carried out in a constant temperature and humidity room at a temperature of 25°C and a humidity of 10%.

The above description is only the preferred embodiment of the present disclosure. It should be pointed out that for an ordinary person skilled in the art, some improvements and modifications can be made without departing from the principles of the present disclosure, and these improvements and modifications should also be considered as the scope of protection of the present disclosure.

## Claims

1. A sodium battery cathode electrode material, is characterized that, the sodium battery cathode electrode material has a chemical formula as follows:
xNaMBO₃.yNa₂Ti₃O₇.zNa₃V₂(BO₃)₃/C;
wherein, the mole number ratio of x to y to z is 0.94-0.96:0.02-0.03:0.02-0.03;
M is Fe and Mn, and the mole number ratio of Fe to Mn is 8-9:1-2; and
the mass fraction of carbon in the sodium battery cathode electrode material is 1.2% to 1.5%.

2. The sodium battery cathode electrode material according to claim 1, is characterized that, the sodium battery cathode electrode material comprises a core material and a first and second coating layers sequentially coated on the surface of the core material,the core material is NaMBO₃, the first coating layer comprises Na₂Ti₃O₇ and Na₃V₂(BO₃)₃, and the second coating layer is amorphous carbon.

3. The sodium battery cathode electrode material according to claim 2, is characterized that, the particle size of the core material is 200 nm to 500 nm, the thickness of the first coating layer is 10 nm to 20 nm, and the thickness of the second coating layer is 1.5 nm to 3.5 nm.

4. A preparation method of the sodium battery cathode electrode material according to any one of claims 1 to 3, is characterized that, it comprises the following steps:
A) mixing a ferrous salt, a manganese salt, and water to obtain a ferromanganese mixed solution;
mixing the ferromanganese mixed solution with the ammonium bicarbonate solution for reaction to obtain a reaction product;
B) adding the reaction product to a hydrazine hydrate solution for slurrying and to an oxalic acid solution for precipitation sequentially, and adjusting the pH of the solution to obtain ferromanganese oxalate;
C) mixing the ferromanganese oxalate with sodium borate and sodium bicarbonate, then adding sodium hexametaphosphate solution for slurrying, grinding same and then spray drying to obtain a material, calcining the obtained material in an inert atmosphere to obtain the first calcined material; and
D) mixing sodium metavanadate, sodium borate, titanium dioxide, sodium stearate, the first calcined material and water, grinding same and then spray drying, after which performing a secondary calcining to obtain a calcined product, sieving the calcined product for iron removal to obtain the sodium battery cathode electrode material.

5. The preparation method according to claim 4, is characterized that, in step A), the ferrous salt is selected from ferrous sulfate crystal;
the manganese salt is selected from manganese sulfate crystal;
the concentration of the ammonium bicarbonate solution is 1.5 mol/L to 1.8 mol/L;
the ratio of the molar weight of the ammonium bicarbonate to the total molar weight of manganese and iron in the ferrous and manganese salts is 2.2-2.5:1; and
after mixing the ferromanganese mixed solution with the ammonium bicarbonate solution, a pH regulator is added to adjust the pH of the slurry to 7.3-7.5, and the stirring speed of the entire process is 300 r/min to 500 r/min.

6. The preparation method according to claim 4, is characterized that, in step B), the concentration of the hydrazine hydrate solution is 0.05 mol/L to 0.1 mol/L;
the mass ratio of the reaction product to the hydrazine hydrate is 1:1.5-2;
the concentration of the oxalic acid solution is 0.2 mol/L to 0.5 mol/L; and
the pH of the solution is adjusted to 4-5.

7. The preparation method according to claim 4, is characterized that, in step C), the molar ratio of ferromanganese oxalate to sodium borate to sodium bicarbonate is 4:1.02-1.03:2.02-2.04;
the mass of sodium hexametaphosphate solution is 2 to 2.5 times the total mass of the added ferromanganese oxalate, sodium borate, and sodium bicarbonate;
the concentration of sodium hexametaphosphate solution is 0.02 mol/L to 0.05 mol/L;
the slurry is ground to a particle size of 0.2 µm to 0.3 µm;
during the spray drying process, the final spray dried material is maintained at a particle size of 10 µm to 30 µm, and a water content of less than 1 wt%, and
during the calcination process, the calcination atmosphere is at least one of carbon dioxide, nitrogen and argon, the temperature is raised to 450-500°C at a heating rate of 80°C/h to 100°C/h for calcining 3 hours to 5 hours, and then the material is cooled at a cooling rate of 100°C/h to 150°C/h to a temperature of less than or equal to 50°C and discharged, the first calcined product is sealed and preserved in a nitrogen environment.

8. The preparation method according to claim 4, is characterized that, in step D), the molar ratio of the first calcined material to sodium metavanadate, sodium borate, titanium dioxide, and sodium stearate is 0.94-0.96:0.04-0.06:0.015-0.0225:0.06-0.09:0.03-0.045;
the titanium dioxide is a nano titanium dioxide with a primary particle size of 15 nm to 50 nm, a BET of 20 m²/g to 40 m²/g, and a purity of greater than or equal to 99 wt%.

9. The preparation method according to claim 4, is characterized that, in step D), the mixing method involves:
mixing sodium metavanadate, sodium borate, titanium dioxide, and sodium stearate, and then adding water for slurrying to obtain a mixed slurry with a solid content of 1 wt% to 3 wt%, followed by adding the first calcined material and mixing same to obtain the mixed slurry;
the grinding involves grinding the material to a particle size of 200 nm to 250 nm;
during the spray drying process, the final spray dried material is maintained at a water content of less than 0.5 wt% and a particle size of 3 µm to 10 µm;
the secondary calcining process involves: a sintering atmosphere of nitrogen or argon gas; a heating rate of 50°C/h to 80°C/h, a heat preservation temperature of 650°C to 700°C, and a heat preservation time of 4 hours to 8 hours, wherein the calcination process is carried out using a roller-hearth furnace, which is connected to a variable frequency induced draft fan, the furnace pressure inside the roller-hearth furnace is controlled to be 60 Pa to 100 Pa higher than the external atmospheric pressure, and the humidity in the heat preservation section is controlled to be less than or equal to 5% and the cooling rate in the cooling section is 100°C/h to 150 °C/h; and
the iron removal by sieving adopts electromagnetic iron removal, and the demagnetization is stopped when the iron removal reaches the magnetic material of the product is less than or equal to 300 ppb, the sieving is carried out using a 100 to 150 mesh sieve;
a vacuum packaging process is also comprised after the iron removal by sieving process, which is carried out in a constant temperature and humidity room at a temperature of 15°C° to 25°C and a humidity of5% to 10%.

10. A sodium battery, is characterized that, the sodium batterycomprises the sodium battery cathode electrode material according to any one of claims 1 to 3.
